# NEW EUROPEAN PATENT SPECIFICATION

(11) **EP 1 300 329 B2**
(45) Date of publication and mention of the opposition decision: **02.05.2012**
(45) Mention of the grant of the patent: 23.07.2008
(21) Application number: 02021681.8
(22) Date of filing: 27.09.2002
(51) Int. Cl.: B62M 9/04, B62M 25/08

(54) **Assisting apparatus for changing speeds in a bicycle transmission**
Schalteinrichtung für ein Fahrradgetriebe
Dispositif de commande pour transmission de bicyclette

(30) Priority: 03.10.2001 US 971328
(43) Date of publication of application: 09.04.2003
(73) Proprietor: SHIMANO INC., Osaka 590-8577 (JP)
(72) Inventor: Kawakami, Tatsuya, Sakai-shi, Osaka (JP)
(74) Representative: GROSSE SCHUMACHER KNAUER VON HIRSCHHAUSEN

(56) References cited:
- EP-A- 1 106 496
- EP-A1- 0 922 630
- EP-A2- 1 132 287
- EP-A2- 1 323 627
- EP-B1- 0 482 559
- EP-B1- 0 658 475
- DE- - OS2 025 708
- GB- - 558 211
- GB- - 645 791
- US- - 4 894 046
- US- - 4 934 503
- US-A- 5 358 451
- US-A- 6 142 899
- US-B1- 6 607 465

## Description

### BACKGROUND OF THE INVENTION

The present invention is directed to bicycle transmissions and, more particularly, to an apparatus for assisting a change speed operation in the bicycle transmission.

Various devices have been developed to help reduce the effort needed to operate bicycle transmissions such as derailleurs and internal hub transmissions. Examples of such devices particularly suited to assist the operation of derailleur transmissions are shown in U. S. Patent No. 5,358,451 and EP 1106496 which discloses all the features of the preambles of independent claims 1 and 30. The devices shown therein for assisting the operation of a rear derailleur employ multiple moving parts that are in constant motion, thus increasing the amount of moving mass as well as the possibility of premature wear on the components. Devices shown therein for assisting the operation of a front derailleur accommodate only two front sprockets. However, many bicycles have more than two front sprockets. Thus, there is a desire for an assist device that can be used with more than two sprockets. It would also be helpful if the number of continuously moving parts is minimized.

### SUMMARY OF THE INVENTION

The present invention as disclosed by the features of independent claims 1 and 30 is directed to an apparatus for assisting a speed change operation in a bicycle transmission. Like prior art devices, the apparatus can accommodate two front sprockets, but the apparatus also can accommodate more than two front sprockets. While it is not critical to realize the full contribution to the art by the present invention, the disclosed embodiments also minimize the number of constantly moving parts, thus reducing inertial forces and wear on the components.

In one embodiment of the present invention, not to be limited thereto, an assisting apparatus for using power from a rotating member to assist the operation of a bicycle transmission comprises a mounting unit and an input transmission member coupled to the mounting unit, wherein the input transmission member moves to at least a first input position, a second input position and a third input position. An output transmission member is coupled to the mounting unit, wherein the output transmission member moves to at least a first output position, a second output position, and a third output position corresponding to the first input position, the second input position and the third input position of the input transmission member, respectively. A rotating member engaging member moves between a rotating member engaging position and a rotating member disengaging position, and a motion transmitting mechanism is provided for transmitting motion from the rotating member engaging member to the output transmission member. A switching mechanism is provided for moving the rotating member engaging member to the rotating member engaging position when the input transmission member is in one of the first input position, second input position or third input position and the output transmission member is not in the corresponding first output position, second output position, or third output position, and for moving the rotating member engaging member to the rotating member disengaging position when the input transmission member is in one of the first input position, second input position or third input position and the output transmission member is in the corresponding first output position, second output position, or third output position.

In another embodiment of the present invention, an assisting apparatus for using power from a rotating member to assist the operation of a bicycle transmission includes many of the elements noted above, but it may or may not accommodate more than two gears. In this embodiment, the input transmission member and the output transmission member are coupled to the mounting member for rotation around a rotational axis. The rotational axis may be common to the input transmission member and to the output transmission member (although such is not necessary), which makes it convenient to detect when the two members are not in the proper corresponding positions.

In another embodiment of the present invention, an assisting apparatus for using power from a rotating member to assist the operation of a bicycle transmission includes many of the elements noted above for the first embodiment, and, like the embodiment noted above, it may or may not accommodate more than two gears. In this embodiment, the switching mechanism, includes an axially sliding member that moves in the direction of the rotational axis when the input transmission member moves to one of the first input position or second input position and the output transmission member does not move to the corresponding first output position or second output position. Among other things, this feature allows the switching function to be laterally distributed.

### BRIEF DESCRIPTION OF THE DRAWINGS

Fig. 1 is a side view of a particular embodiment of a bicycle that incorporates an apparatus according to the invention for assisting a speed change operation in a bicycle transmission;
Fig. 2 is a close-up partially transparent view of a particular embodiment of an assisting apparatus according to the invention for changing speeds in a bicycle transmission;
Fig. 3 is an exploded view of the assisting apparatus shown in Fig. 2;
Fig. 4 is an assembled view of a portion of the switching mechanism shown in Fig. 2;
Fig. 5 is an exploded view of a portion of the switching mechanism shown in Fig. 4;
Figs. 6A and 6B are front views showing the operation of position sensing members when the input transmission member rotates clockwise;
Fig. 7 is a side view showing he operation of the of the switching mechanism;
Fig. 8 is an exploded view showing the cooperation between the switching mechanism and the motion transmitting mechanism;
Fig. 9A is a side view of he assisting apparatus when the apparatus begins the assisting operation;
Fig. 9B is a view taken along 9B-9B 9in Fig. 9A;
Fig. 9C is a view taken along line 9C-9C in Fig. 9A;
Figs. 10A and 10B illustrate the operation of the motion transmitting mechanism when the rotating member engaging pawl begins rotating with the rotating member;
Figs. 11A and 11B illustrate the operation of the motion transmitting mechanism when the rotating member engaging pawl disengages from the rotating member;
Fig. 12A is a side view of the assisting apparatus showing the rotating member engaging pawl returning to the start position;
Fig. 12B is a view taken along 12B-12B in Fig. 12A;
Fig. 12C is a view taken along line 12C-12C in Fig. 12A;
Fig. 13A is a side view of the assisting apparatus at the completion of the shifting operation;
Fig. 13B is a view taken along 13B-13B in Fig. 13A;
Fig. 13C is a view taken along line 13C-13C in Fig. 13 A;
Fig. 14 is a front view showing the operation of position sensing members when the input transmission member rotates counterclockwise;
Figs. 15A and 15B illustrate the operation of the motion transmitting mechanism when the apparatus begins the assisting operation;
Figs. 16A and 16B illustrate the operation of the motion transmitting mechanism when the rotating member engaging pawl begins rotating with the rotating member;
Figs. 17A and 17B illustrate the operation of the motion transmitting mechanism when the rotating member engaging pawl disengages from the rotating member;
Figs. 18A and 18B illustrate the operation of the motion transmitting mechanism as the rotating member engaging pawl returns to the start position; and
Figs. 19A and 19B illustrate the operation of the motion transmitting mechanism at the completion of the shifting operation.

### DETAILED DESCRIPTION OF THE EMBODIMENTS

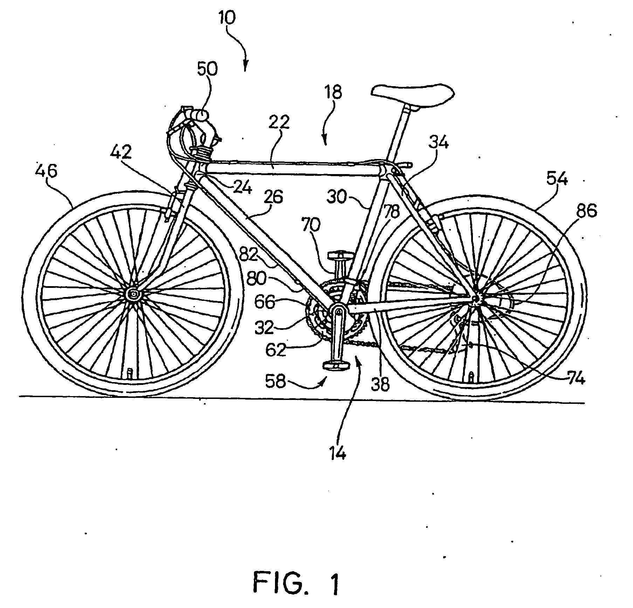

Fig. 1 is a side view of a bicycle 10 that incorporates a particular embodiment of an assisting apparatus 14 according to the invention for assisting a change speed operation in a bicycle transmission. Bicycle 10 may be any type of bicycle, and in this embodiment bicycle 10 includes a typical frame 18 comprising a top tube 22, a head tube 24, a down tube 26 extending downwardly from head tube 24, a seat tube 30 extending downwardly from top tube 22, a bottom bracket 32 disposed at the junction of down tube 26 and seat tube 30, a pair of seatstays 34 extending rearwardly and downwardly from top tube 22, and a pair of chainstays 38 extending rearwardly from bottom bracket 3 2. A fork 42 is rotatably supported within head tube 24, and a wheel 46 is rotatably supported to the lower end of fork 42. The rotational direction of fork 42 and wheel 46 is controlled by handlebars 50 in a well known manner. A rear wheel 54 having a plurality of coaxially mounted freewheel sprockets (not shown) is rotatably supported at the junction of seatstays 34 and chainstays 3 8, and a pedal assembly 58 supporting a plurality of front (chainwheel) sprockets 62 is rotatably supported within bottom bracket 32. In this embodiment, three front sprockets 62 rotate coaxially and integrally with pedal assembly 58. A had 66 engages one of the plurality of front sprockets 62 and one of the plurality of freewheel sprockets mounted to rear wheel 54. A front derailleur 70 moves chain 66 from one front sprocket 62 to another, and a rear derailleur 74 moves chain 66 from one freewheel sprocket to another. Both operations are well known. In this embodiment, front derailleur 70 is controlled by pulling and releasing a wire 78 coupled to assisting apparatus 14, and assisting apparatus 14 is controlled by an inner wire 80 of a Bowden-type control cable 82. Rear derailleur 74 is controlled by a Bowden-type control cable 86 in a conventional manner.

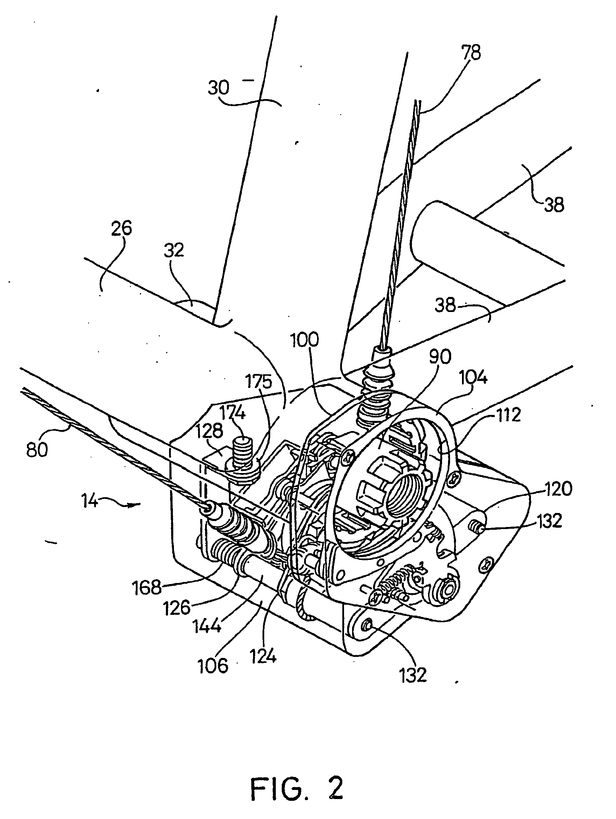

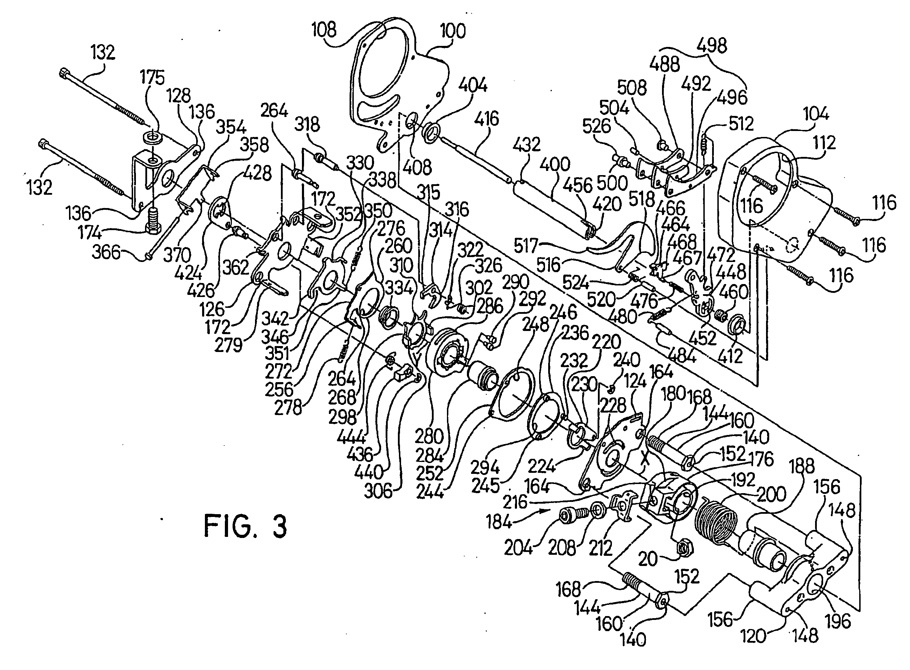

Fig. 2 is a close-up partially transparent view of assisting apparatus 14, and Fig. 3 is an exploded view of he assisting apparatus shown in Fig. 2. In this embodiment, assisting apparatus 14 uses the rotational power of a crank axle 90 that is rotatably supported within bottom bracket 32 and rotated by pedal assembly 58 to assist the operation of front derailleur 70. Assisting apparatus 14 comprises upper housing members 100 and 104 and a lower housing member 106 (not shown in Fig. 3). Upper housing members 100 and 104 include openings 108 and 112, respectively, that align with the opening in bottom bracket 32, and they are fastened together with screws 116. Disposed within the space primarily formed by housing member 106 are mounting members 120, 124, 126 and 128 which are connected together by screws 132 that extend through openings 136 in mounting member 128, through openings 140 in hollow bolts 144 and into threaded openings 148 in mounting member 120. In the assembled unit, heads 152 of hollow bolts 144 are sandwiched between mounting member 124 and cylindrical portions 156 of mounting member 120, shanks 160 of hollow bolts 144 extend through openings 164 of mounting member 124, threaded portions 168 of hollow bolts 144 screw into threaded openings 172 in mounting member 126, and the ends of hollow bolts 144 abut against the side of mounting member 128. Mounting member 128 is attached to the bicycle using a bolt 174 and a washer 175.

An input transmission member 176 is supported by a tubular bearing 188 that extends into an opening 192 in input transmission member 176 and into an opening 196 in mounting member 120. Thus, input transmission member 176 is rotatably coupled relative to mounting members 120, 124, 126 and 128 so that input transmission member 176 rotates around a rotational axis X. Input transmission member 176 is biased counterclockwise relative to mounting members 120, 124, 126 and 128 by a spring 200 fixed in a known manner between input transmission member 176 and mounting member 120. Input transmission member 176 includes an input control wire winding surface 180 and a wire coupler 184 comprising a screw 204, a washer 208 and a wire receiving member 212. Screw 204 screws into a threaded opening 216 in input transmission member 176 so that inner wire 80 is firmly sandwiched between input transmission member 176 and wire receiving member 212. Inner wire 80 then maps around wire winding surface 180 so that pulling inner wire 80 causes input transmission member 176 to rotate clockwise against the biasing force of spring 200, and releasing inner wire 80 causes input transmission member 176 to rotate counterclockwise in accordance with the biasing force of spring 200. Since, in this embodiment, there are three front sprockets 62, input transmission member 176 is designed to move to three distinct input positions.

An input drive member 220 has a pair of coupling tabs 224 that extend through slots 228 in mounting member 124 and onto retaining slots (not shown) in input transmission member 176 so that input drive member 220 rotates together with input transmission member 176. A drive arm 230 of input drive member 220 is coupled to a post 232 extending from an intermediate ring 236 and held in place with a C-clip 240. Position sensing member engaging members 245 and 246 in the form of rollers rotatably attached to intermediate ring 236 engage an inner peripheral surface 248 of a position sensing member 244 that defines a position sensing arc. A coupling ear 252 of position sensing member 244 is coupled to a coupling tab 256 of another position sensing member 260. Position sensing member 260 includes an oval-shaped inner peripheral surface 264, an outer peripheral surface 268 defining a pawl directing surface (member), and control surfaces 272 and 276. Both position sensing member 244 and position sensing member 260 are pivotably coupled to a pivot shaft 264 that extends from mounting member 126, and they are biased in a counterclockwise direction by a spring 278 connected between coupling tab 256 and a ledge 279 extending from mounting member 126. Position sensing members 244 and 260 in this embodiment can be deemed a position sensing unit.

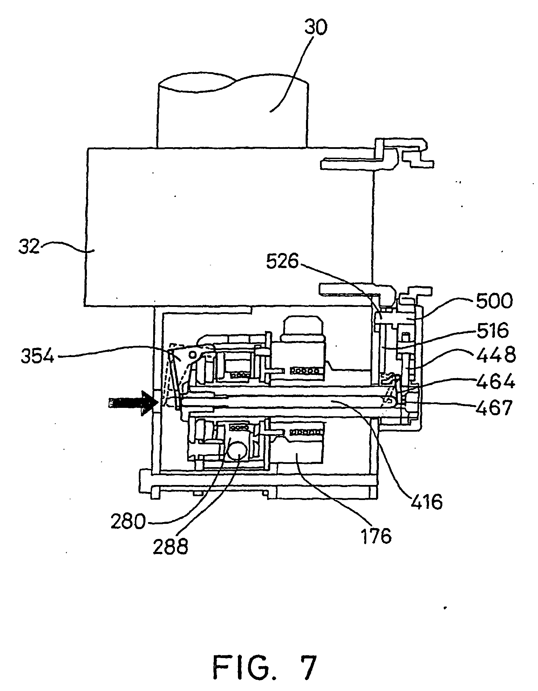

An output transmission member 280 in the form of a wire winding member is supported on a tubular bearing 284 that abuts against mounting member 124 in the assembled state so that output transmission member 280 rotates around a rotational axis Y. In this embodiment, rotational axis Y is coincident with rotational axis X. Output transmission member 280 has a wire winding groove 286 and a cable end stop 288 (Fig. 7) for receiving a cable end bead therein (not shown) to function as a wire coupler. Since there are three front sprockets 62 in this embodiment, output transmission member 280 is designed to move to three distinct output positions. Abutment members 290 and 292 are attached to one side of output transmission member 280 for engaging an inner peripheral surface 294 of intermediate ring 236 in a manner discussed below. A ratchet 298 has a pair of coupling tabs 302 that extend into retaining slots (not shown) in output transmission member 280 so that ratchet 298 rotates together with output transmission member 280. Ratchet 298 includes a plurality of drive teeth 306 (e.g., three) and a plurality of position maintaining teeth 310 (e.g., three) defining respective drive surfaces and position maintaining surfaces.

A position maintaining pawl 314 having pawl teeth 315 and 316 is rotatably supported on a pivot shaft 318 that extends from mounting member 126. Position maintaining pawl 314 is held in place on pivot shaft 318 by a C-clip 322, and it is biased in a clockwise direction by a spring 326 in a known manner. A position release plate 330 is rotatably supported on a tubular bearing 334 that abuts against mounting member 126 in the assembled state. Position release plate 330 includes a pawl release member in the form of a pawl release projection 338, a drive pawl engaging projection 342 and a drive pawl receiving recess 346. Position release plate 330 is biased in a counterclockwise direction by a spring 350 connected between a bias arm 351 extending from position release plate 330 and a bias arm 352 extending from mounting member 126. A motion converting member in the form of a motion converting plate 354 having mounting ears 358 is pivotably connected to corresponding mounting ears 362 on mounting member 126 through a pivot shaft 366. Motion converting plate 354 includes a drive tab 370 which functions in a manner described below.

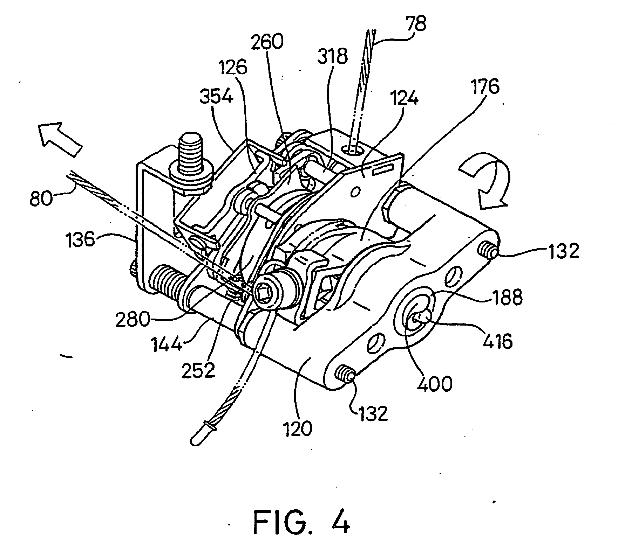

A drive shaft 400 extends through a tubular bearing 404 mounted in an opening 408 formed in mounting member 100, extends through bearings 334, 284 and 188, exits mounting member 120 as shown in Fig. 4, and terminates in a bearing 412 disposed at a side surface of mounting member 104. A push rod 416 extends through a central bore 420 in drive shaft 400. A pawl coupler 424 having a pivot shaft 426 extending therefrom is nonrotatably coupled to drive shaft 400 by coupling tabs 428 that mesh with corresponding coupling grooves 432 disposed at one end of dive shaft 401 A motion transmitting pawl 436 is pivotably supported on pivot shaft 426 with a C-clip 440, and it is biased in a clockwise direction by a spring 444. Another pawl coupler 448 is nonrotatably coupled to drive shaft 400 by coupling tabs 452 that mesh with corresponding coupling grooves 456 disposed at the other end of drive shaft 400. The radially inner edges of coupling tabs 452 form a threaded surface for threadingly receiving a set screw 460 therein. A release control member 464 having a release control tab 466 and a bias tab 467 is pivotably mounted to pawl coupler 448 by mounting ears 468 that engage corresponding mounting ears 472 on pawl coupler 448. Release control member 464 can be considered a pawl retaining member in this embodiment, and it is biased clockwise by a spring 476 mounted between bias tab 467 and set screw 460. Pawl coupler 448, and hence drive shaft 400, is biased counterclockwise by a spring 480 mounted between pawl coupler 448 and a spring support 484 extending from mounting member 104. Pawl plates 488, 492 and 496 are fastened together with fasteners 500 and 504, and pawl plates 488 and 496 are pivotably coupled to pawl coupler 448 through a pivot shaft 508. Pawl plates 488, 492 and 496 form an overall pawl 498 that receives a biasing force in a counterclockwise direction by a spring 512 (which can be considered a pawl moving member in this embodiment) coupled between pawl plate 496 and pawl coupler 448. A pawl control member 516 having an arcuate pawl control surface 517 (which can be considered another pawl retaining member in this embodiment) and an arcuate release control surface 518 is pivotably coupled to mounting member 104 through a pivot shaft 520, and it receives a biasing force directed in a counterclockwise direction viewed in Fig. 3 by a spring 524 mounted around pivot shaft 520 between release control surface 518 and mounting member 104. Pawl control surface 517 engages a complementary pawl control surface 526 extending from fastener 500.

In this embodiment, pawl 498, pawl coupler 448, drive shaft 400, pawl coupler 424, pawl 436 and ratchet 298 constitute a motion transmitting mechanism for communicating rotational motion of axle 90 to output transmission member 280. Furthermore, in this embodiment, pawl control member 516, release control member 464, push rod 416, motion converting member 354, position sensing members 244 and 260, intermediate ring 236 and input drive member 220 constitute a switching mechanism for moving pawl 498 to a rotating member engaging position when the input transmission member 176 is in one of the first input position, second input position or third input position and the output transmission member 280 is not in the corresponding first output position, second output position, or third output position, and for moving the pawl 498 to the rotating member disengaging position when the input transmission member 176 is in one of the first input position, second input position or third input position and the output transmission member 280 is in the corresponding first output position, second output position, or third output position.

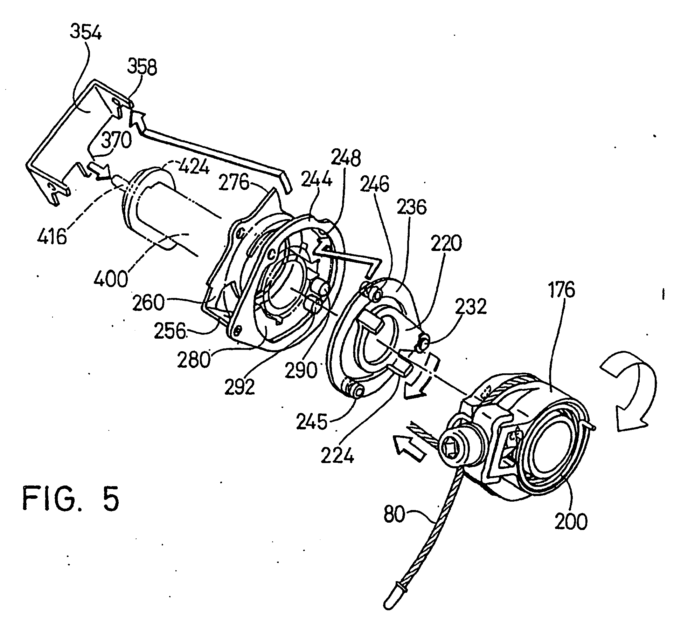

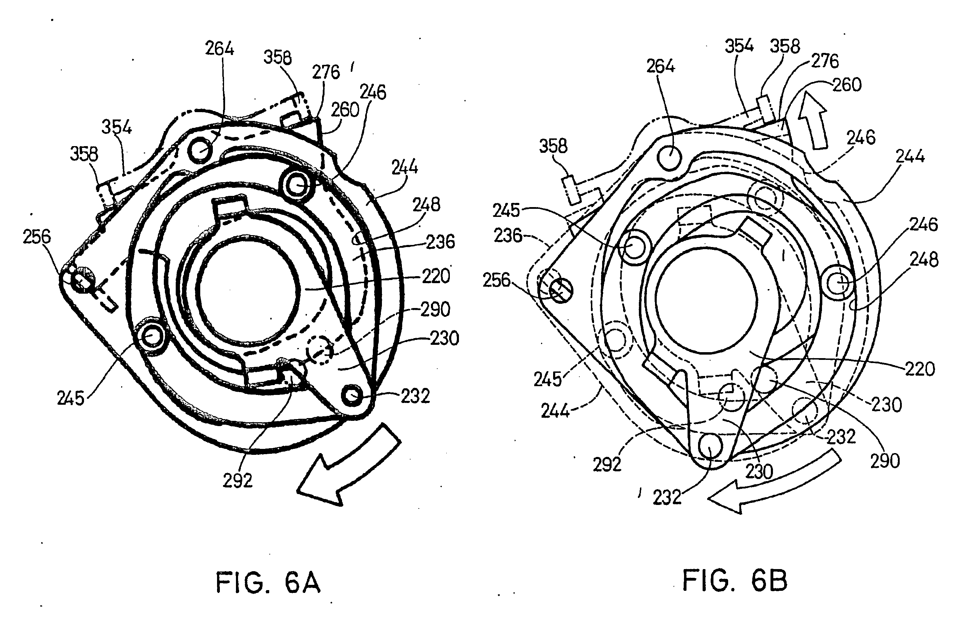

The operation of assisting apparatus 14 when inner wire 80 is pulled is illustrated in Figs. 5-13C. As shown in Figs 5, 6A and 6B, pulling inner wire 80 causes input transmission member 176 to rotate clockwise against the biasing force of spring 200 to an upshifting position relative to output transmission member 280 (in this embodiment). This, in turn, causes input drive member 220 to rotate clockwise, since input transmission member 176 and input drive member 220 rotate together as a unit. Drive arm 230 of input drive member 220 rotates intermediate ring 236 clockwise, but when inner peripheral surface 294 of intermediate ring 236 contacts abutment member 290 on output transmission member 280 as shown in Fig. 6B, abutment member 290 acts as a fulcrum and causes intermediate ring 236 to rotate eccentrically with respect to the coincident rotational axes X and Y. As a result, intermediate ring 236 has a component of motion directed to the right, roller 246 exerts a force directed to the right against position sensing member 244, and position sensing members 244 and 260 rotate counterclockwise around pivot shaft 264. This counterclockwise rotation of position sensing members 244 and 260 causes control surface 276 on position sensing member 260 to move radially relative to input transmission member 176 and output transmission member 280 to push upwardly on mounting ear 358 (which can be considered a switch-on position), thus causing motion converting plate 354 to rotate counterclockwise so that drive tab 3 70 presses against push rod 416.

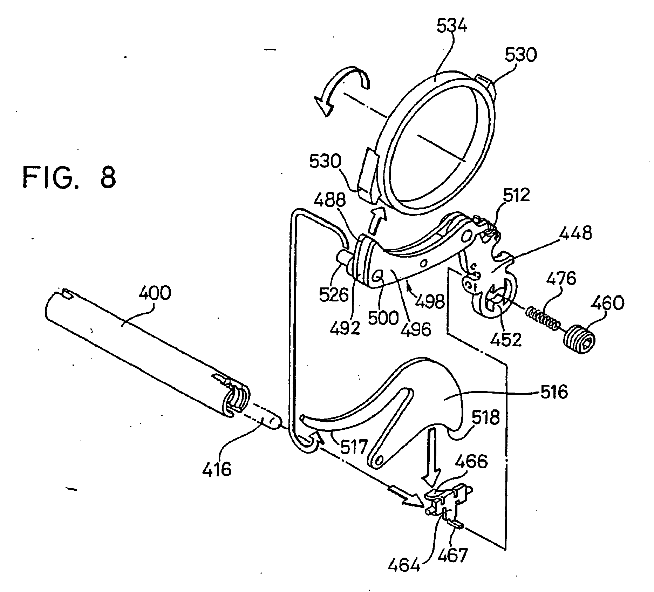

As shown in Figs. 7 and 8, drive tab 370 moves push rod 416 to the right, and push rod 416 presses against bias tab 467 to cause release control member 464 to rotate counterclockwise. This causes release control tab 460 to rotate downwardly which, in turn, allows pawl control member 516 to rotate clockwise., because the weight of pawl control member 516 overcomes the biasing force of spring 524. Clockwise rotation of pawl control member 516 causes pawl control surface 517 to move upwardly, thus allowing pawl 498 to rotate clockwise into a rotating member engaging position as a result of the biasing force of spring 512.

In this position, pawl 498 can engage either of two abutments 530 formed on a rotating member 534 that is mounted for integral rotation (counterclockwise) with axle 90. Thus, pawl 498 functions as a rotating member engaging member.

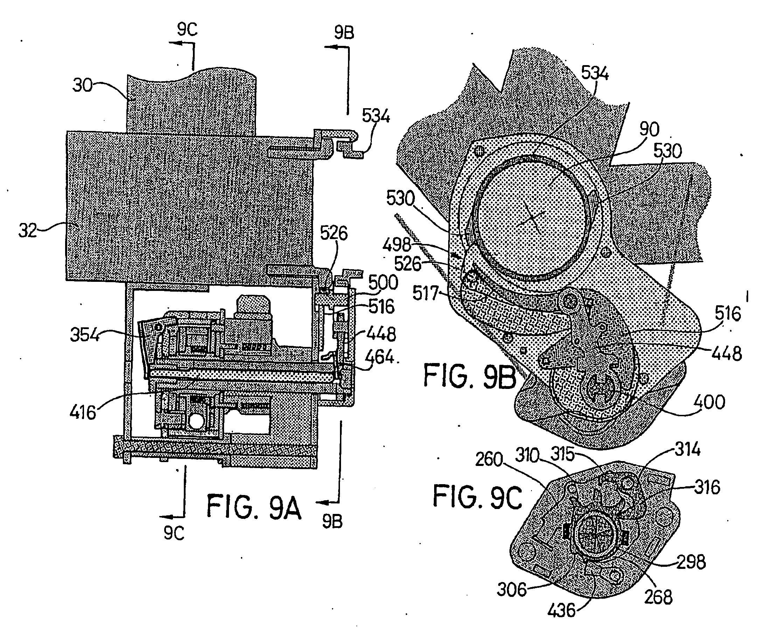

Figs. 9A-9C are views of assisting apparatus 14 when apparatus 14 begins the assisting operation. These views correspond to a situation where the chain 66 engages the smallest front sprocket 62 and is to be switched to the next larger sprocket. As shown in Fig. 9B, pawl 498 is in the rotating member engaging position and is contacting one of the abutments 530 on rotating member 530. When position sensing member 260 is in the counterclockwise rotated position shown in Fig. 9C, the oval-shaped inner peripheral surface 264 allows pawl directing surface 268 to move to me right to expose drive teeth 306 on ratchet 298 arid to guide motion transmitting pawl 436 into engagement with the nearest drive tooth 306. At this time, pawl tooth 316 of position maintaining pawl 314 is located to the right of the rightmost position maintaining tooth 310.

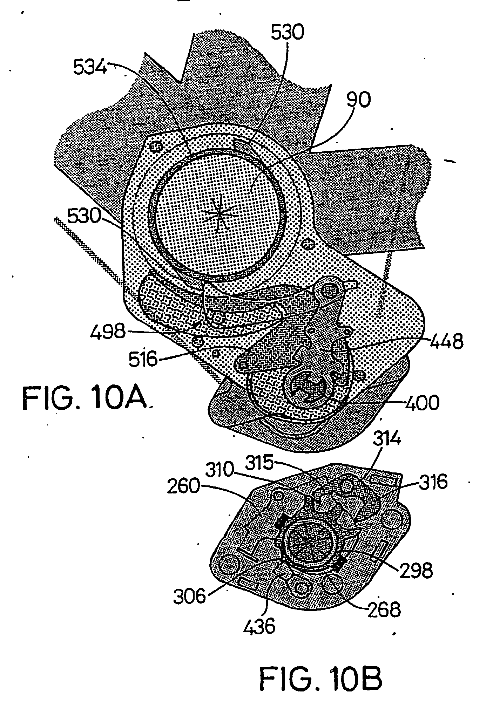

Figs. 10A and 10B illustrate the operation of the motion transmitting mechanism when the rotating member engaging pawl 498 begins moving with the rotating member 534. As shown in those figures, the counterclockwise rotation of rotating member 534 causes pawl coupler 448 and drive shaft 400 to rotate clockwise. This, in turn, causes pawl coupler 424 and motion transmitting pawl 436 to engage the nearest drive tooth 306 and rotate ratchet 298 clockwise with output transmission member 280. Output transmission member 280 then pulls on wire 78 to activate front derailleur 70. At the same time, pawl tooth 316 rides up and over the rightmost position maintaining tooth 310.

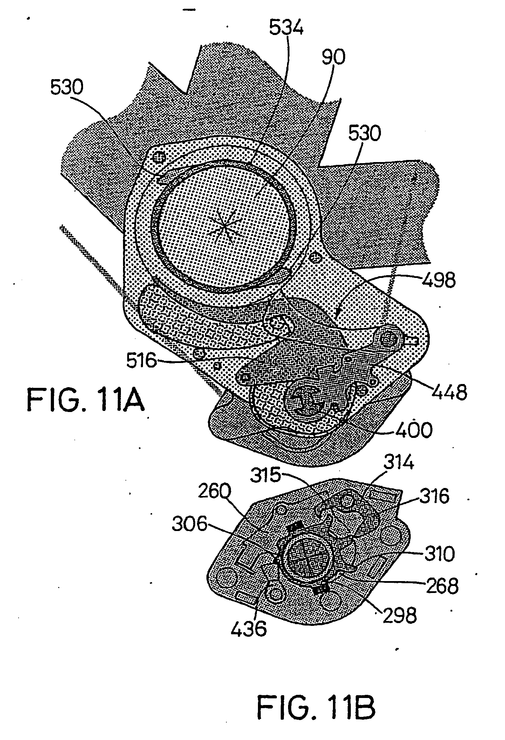

Figs. 11A and 11B illustrate the operation of the motion transmitting mechanism when the rotating member abutment 530 of rotating member 534, and ratchet 298 has rotated such that pawl tooth 316 has ridden up but not over the middle position maintaining tooth 310. At this time, drive shaft 400 and pawl coupler 448 will begin rotating counterclockwise as a result of the biasing force exerted on pawl coupler 448 by spring 480.

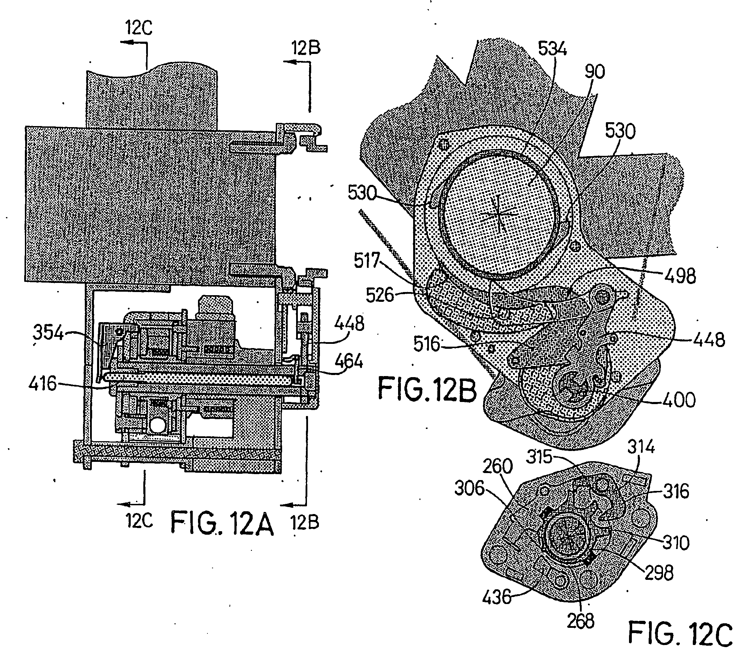

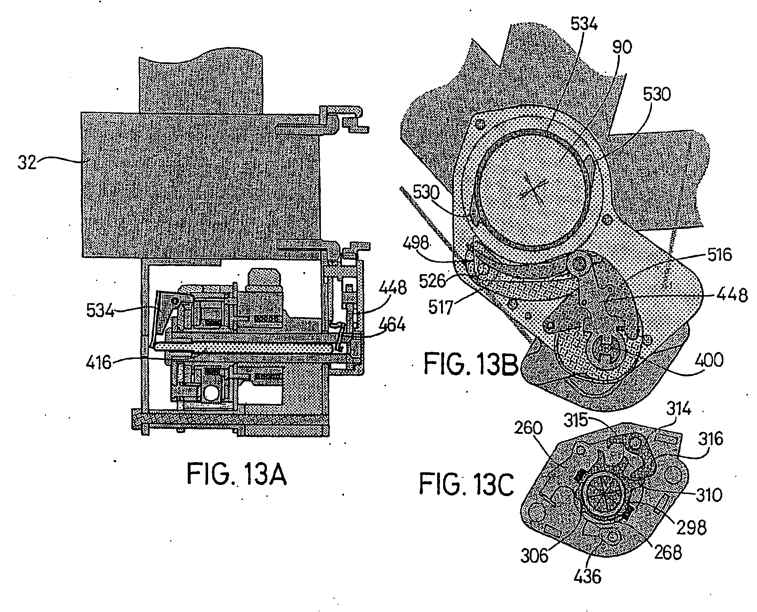

Figs. 12A-12C are views of assisting apparatus 14 as the rotating member engaging pawl 498 moves back toward the start position, and Figs. 13A-13C are views of assisting apparatus 14 at the completion of the shifting operation. As shown in Figs. 12A-12C, drive shaft 400 and pawl coupler 448 rotate counterclockwise, motion transmitting pawl 436 disengages from drive tooth 306, and ratchet 298 and output transmission member 280 rotate counterclockwise as a result of the biasing force exerted on wire 78 by the return spring associated with front derailleur 70. Because output transmission member 280 has a net clockwise rotation from the position shown in Figs 9A-9C, abutment member 290 no longer acts as a fulcrum against the inner peripheral surface 294 of intermediate ring 236, and roller 245 on intermediate ring 236 presses against the inner peripheral surface 248 of position sensing member 244 to rotate position sensing member 244 clockwise. At that time, control surface 276 of position sensing member 260 no longer presses up against mounting ear 358 on motion converting plate 354 (which can be considered a switch-off position), motion converting plate 354 rotates clockwise push rod 416 moves to the left and release control member 464 rotates clockwise as shown in Fig. 12A as a result of the biasing force of spring 476, pawl control member 516 rotates counterclockwise, and pawl control surface 517 presses down on pawl control surface 526 of fastener 500 to rotate pawl 498 counterclockwise to the rotating member disengaged position shown in Fig. 13B. Also, ratchet 298 rotates counterclockwise until pawl tooth 316 of position maintaining pawl 314, under the biasing force of spring 326, abuts against the left side of the rightmost position maintaining tooth 310 as shown in Fig. 13C, thus maintaining the position of output transmission member 280.

It should be noted that, in this embodiment, ratchet 298 and output transmission member 280 initially rotate beyond the desired position and then return to the desired position. This produces an effect called "overshift," wherein the front derailleur 70 moves chain 66 beyond the destination sprocket and then returns to the desired position, usually centered over the destination sprocket. This effect, normally achieved by manual operation of the derailleur, is well known and sometimes desirable when attempting to move a chain from a smaller sprocket to a larger sprocket. Of course, depending on the application, the mechanism can be designed to avoid such a phenomenon.

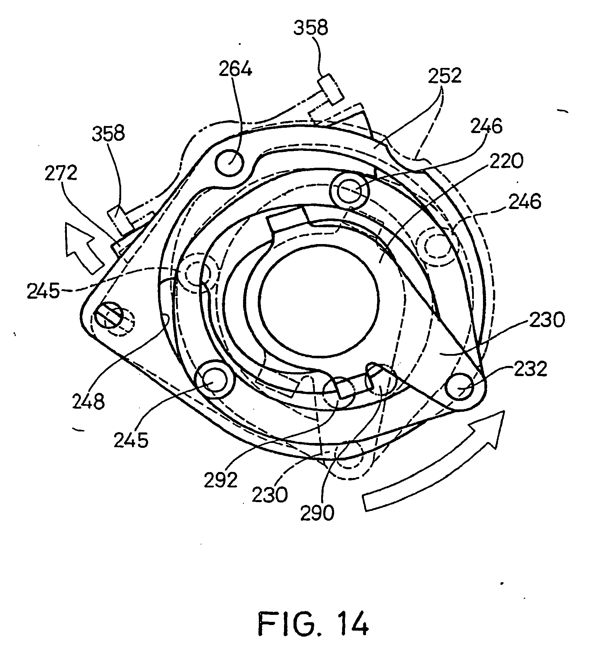

The operation of assisting apparatus 14 when inner wire 80 is released is illustrated in Figs. 14-19C. Releasing inner wire 80 causes input transmission member 176 and input drive member 220 to rotate counterclockwise in accordance with the biasing force of spring 200 to a downshifting position relative to output transmission member 280 (in this embodiment). Drive arm 230 of input drive member 220 rotates intermediate ring 236 counterclockwise, but when inner peripheral surface 294 of intermediate ring 236 contacts abutment member 292 on output transmission member 280 as shown in Fig. 14, abutment member 292 acts as a fulcrum and causes intermediate ring 236 to rotate eccentrically with respect to the coincident rotational axes X and Y. As a result, roller 245 exerts a force directed to the left against position sensing member 244, thus causing position sensing members 244 and 260 to rotate clockwise around pivot shaft 264. This clockwise rotation of position sensing members 244 and 260 cause control surface 272 on position sensing member 260 to push upwardly on the left side mounting ear 358, thus causing motion converting plate 354 to rotate counterclockwise so that drive tab 370 presses against push rod 416.

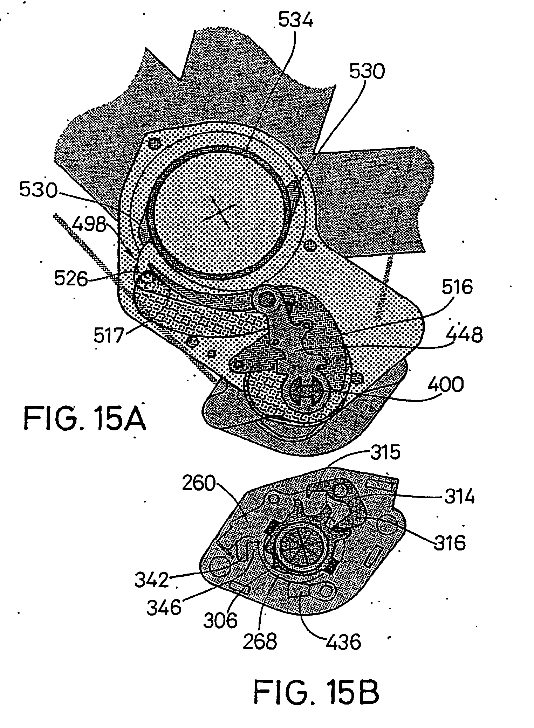

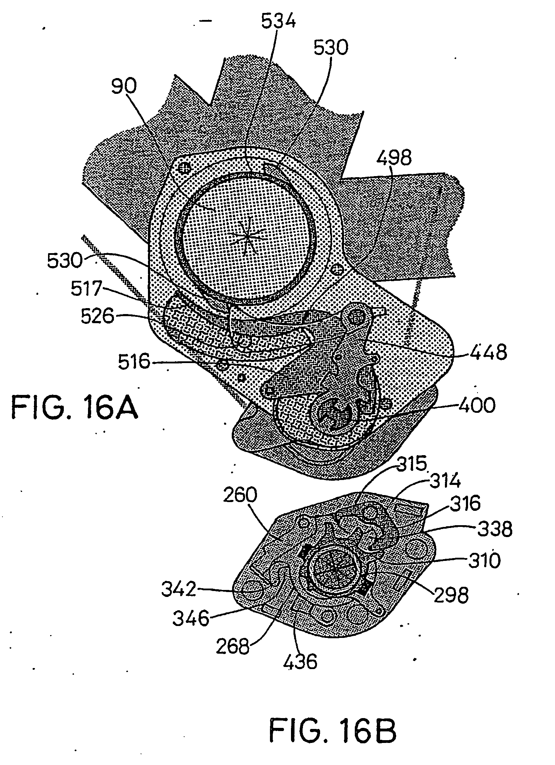

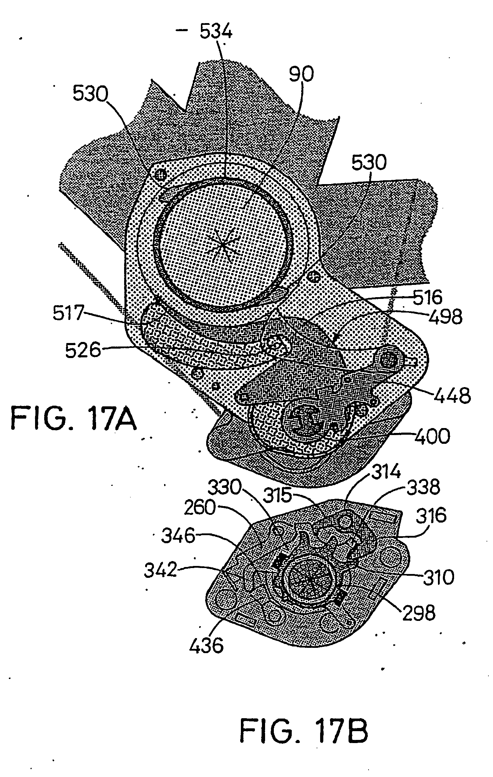

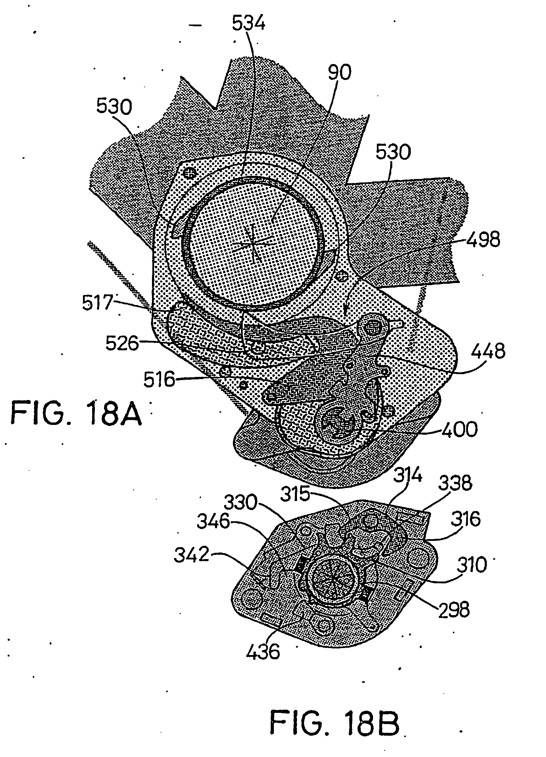

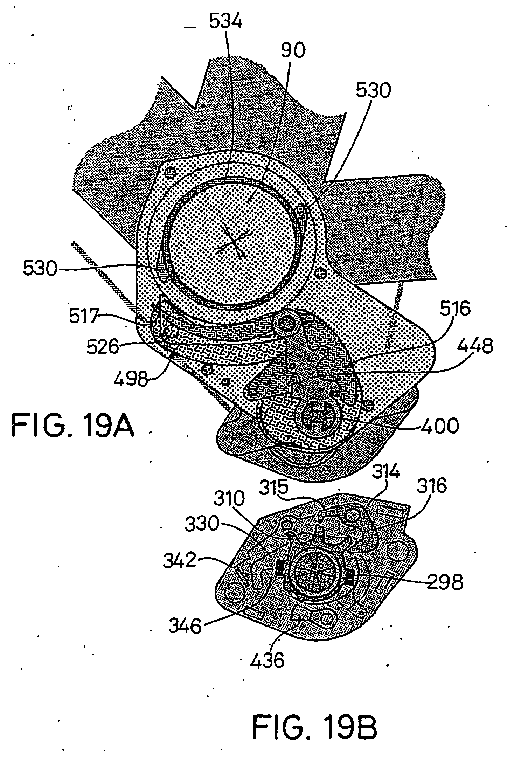

The operation of assist mechanism 14 at this time is similar to the operation when wire 80 is pulled, so only the differences will be described. The main difference lies in the operation of motion transmitting pawl 436. Since position sensing members 244 and 260 rotated clockwise, the pawl directing surface 268 of position sensing member 260 moves to the left as shown in Fig. 15B to prevent motion transmitting pawl 435 from engaging the drive surfaces 306 of ratchet 298. As a result, as shown in Fig. 16B, motion transmitting pawl 436 moves along pawl directing surface 268, bypassing drive surfaces 306, until motion transmitting pawl 436 engages pawl engaging projection 342 on position release plate 330 as shown in Fig. 17B. Motion transmitting pawl 436 then rotates position release plate 330 to cause pawl release projection 338 to press against the left side of pawl tooth 316, thus causing position maintaining pawl 314 to rotate counterclockwise around pivot shaft 318. As soon as pawl tooth 316 clears the tip of the rightmost position maintaining tooth 310, ratchet 298 rotates counterclockwise until the middle position maintaining tooth 310 is caught by pawl tooth 315 as shown in Fig. 18B. As motion transmitting pawl 436 moves away from pawl release projection 338 back to the start position, position release plate 330 rotates counterclockwise in accordance with the biasing force of spring 350, thus rotating pawl engaging projection 3 42 away from pawl tooth 316. This, in turn, allows position maintaining pawl 314 to rotate clockwise to the final position shown in Fig. 19B.

One advantage of an assisting apparatus according to the present invention is that the assisting apparatus can be designed for any number of front sprockets. Furthermore, a rider can shift more than one gear at a time because of the design of intermediate ring 23 6, rollers 245 and 246, abutment members 290 and 292, and position sensing members 244 and 260. More specifically, when the rider pulls wire 80 to rotate input transmission member 176 to shift more man two gears, such as from the smallest to the largest front sprocket 62 (from the first input position to the third input position), intermediate ring 236 rotates further to a position such that the fulcrum effect of abutment member 290 or 292 remains after output transmission member 280 rotates to the second output position. Thus, although pawl 498 disengages from the corresponding abutment 530 after abutment 530 rotates past it, pawl 498 remains in the rotating member engaging position until it once again engages one of the abutments 530 to cause the rotation of output transmission member 280 to the third output position. Once the output transmission member 280 reaches the third output position corresponding to the third input position, the fulcrum effect of abutment member 290 or 292 ceases, and the system reverts to the idle state as described above.

While the above is a description of various embodiments of the present invention, farther modifications may be employed without departing from the spirit and scope of the present invention. For example, the size, shape, location or orientation of the various components may be changed as desired. The functions of one element may be performed by two, and vice versa. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus on a particular structure or feature.

## Claims

1. An assisting apparatus (14) for using power from a rotating member (534) to assist the operation of a bicycle transmission comprising:
a mounting unit;
a rotating member engaging member (498) that moves between a rotating member engaging position and a rotating member disengaging position;
a motion transmitting mechanism for transmitting motion from the rotating member engaging member (498) to the output transmission member (280);
an input transmission member (176) coupled to the mounting unit, wherein the input transmission member (176) moves to at least a first input position, a second input position and a third input position;
an output transmission member (280) coupled to the mounting unit, wherein the output transmission member (280) moves to at least a first output position, a second output position, and a third output position corresponding to the first input position, the second input position and the third input position of the input transmission member (176), respectively; and
a switching mechanism for moving the rotating member engaging member (498) to the rotating member engaging position when the input transmission member (176) is in one of the first input position, second input position or third input position and the output transmission member (280) is not in the corresponding first output position, second output position, or third output position, and for moving the rotating member engaging member (498) to the rotating member disengaging position when the input transmission member (176) is in one of the first input position, second input position or third input position and the output transmission member (280) is in the corresponding first output position, second output position, or third output position,
**characterized in that**
the output transmission member (280) includes an output control wire coupler for coupling an output control wire thereto.

2. The apparatus (14) according to claim 1 wherein the input transmission member (176) includes an input control wire coupler for coupling an input control wire thereto.

3. The apparatus (14) according to claim 1 or 2 wherein the input transmission member (176) includes an input control wire winding surface (180).

4. The apparatus (14) according to any of the preceding claims wherein the output transmission member (280) includes an output control wire winding surface.

5. The apparatus (14) according to any of the preceding claims wherein the motion transmitting mechanism comprises:
a ratchet (298) including a drive surface (306) coupled to the output transmission member (280); and
a motion-transmitting pawl (436) for engaging the drive surface (306).

6. The apparatus (14) according to any of the preceding claims wherein the motion transmitting mechanism includes a drive shaft (400) that rotates when the rotating member engaging member (498) engages the rotating member (534), and wherein the motion transmitting pawl (436) is coupled to the drive shaft.

7. The apparatus (14) according to any of the preceding claims wherein the rotating member engaging member (498) comprises a rotating member engaging pawl (498) coupled to the drive shaft.

8. The apparatus (14) according to claims 5 to 7 wherein the ratchet includes a plurality of position maintaining teeth (310), and further comprising a position maintaining pawl (314) that engages selected ones of the plurality of position maintaining teeth (310) for maintaining the output transmission member (280) in a selected position.

9. The apparatus (14) according to claims 7 and 8 wherein the rotating member engaging pawl (498) is coupled to a first end of the drive shaft, and wherein the motion transmitting pawl (314) is coupled to a second end of the drive shaft.

10. The apparatus (14) according to any of the preceding claims wherein the input transmission member (176) is coupled to the mounting unit for rotation around an input transmission member rotational axis (X), and wherein the output transmission member (280) is coupled to the mounting unit for rotation around an output transmission rotational axis (Y).

11. The apparatus (14) according to any of the preceding claims wherein the switching mechanism comprises a position sensing member (244, 260) operatively coupled to the input transmission member (176) and to the output transmission member (280), wherein the position sensing member moves to a switch-on position when the input transmission member (176) is in one of the first input position, second input position or third input position and the output transmission member (280) is not in the corresponding first output position, second output position, or third output position, and wherein the position sensing member moves to a switch-off position when the input transmission member (176) is in one of the first input position, second input position or third input position and the output transmission member (280) is in the corresponding first output position, second output position, or third output position.

12. The apparatus (14) according to any of the preceding claims wherein the rotating member engaging member (498) comprises a rotating member engaging pawl (498).

13. The apparatus (14) according to any of the preceding claims wherein the switching mechanism comprises:
a pawl moving member (512) that moves the rotating member engaging pawl (498) to the rotating member engaging position; and
a pawl retaining member (464, 517) that retains the rotating member engaging pawl (498) in the rotating member disengaging position when the switching mechanism is in the switch-off position and that allows the pawl moving member (512) to move the rotating member engaging pawl (498) to the rotating member engaging position when the switching mechanism is in the switch-on position.

14. The apparatus (14) according to claims 11 to 13 wherein the position-sensing member moves radially relative to the input transmission member (176).

15. The apparatus (14) according to claims 11 to 14 wherein the switching mechanism further comprises a motion converting member (354) for converting radial motion of the position sensing member to motion at least in part in the direction of the input transmission member rotational axis (X).

16. The apparatus (14) according to claims 11 to 15 wherein the switching mechanism further comprises a push rod (416) for communicating motion of the motion converting member to the pawl retaining member (464, 517).

17. The apparatus (14) according to any of the preceding claims wherein the input transmission member rotational axis (X) coincides with the output transmission member rotational axis (Y).

18. The apparatus (14) according to any of the preceding claims wherein the switching mechanism further comprises an intermediate ring (236) having a position sensing member engaging member (245, 246) that engages the position sensing member, and wherein the intermediate ring (236) is rotated by the input transmission member (176).

19. The apparatus (14) according to claim 18 wherein the switching mechanism further comprises an abutment (290, 292, 530) for causing the intermediate ring (236) to rotate eccentrically.

20. The apparatus (14) according to claims 18 and 19 wherein the abutment (290, 292, 530) is coupled to the output transmission member (280).

21. The apparatus (14) according to claims 18 to 20 wherein the position sensing member includes a circumferentially extending surface defining a position sensing arc (248), wherein the position sensing member engaging member (245, 246) engages the position sensing arc, and wherein the abutment (290, 292, 530) engages an inner peripheral surface of the intermediate ring (236).

22. The apparatus (14) according to claims 18 to 21 wherein the position-sensing member engaging member comprises a roller (245, 246).

23. The apparatus (14) according to any of the preceding claims further comprising a release member (338) for disengaging the position-maintaining pawl (314).

24. The apparatus (14) according to any of the preceding claims wherein the input transmission member (176) rotates to an upshifting position relative to the output transmission member (280), and wherein the input transmission member (176) rotates to a downshifting position relative to the output transmission member (280).

25. The apparatus (14) according to any of the preceding claims further comprising a pawl directing member, wherein the pawl directing member directs the motion transmitting pawl (436) to engage the drive surface of the ratchet (298) when the input transmission member (176) rotates to one of the upshifting position or the downshifting position, and wherein the pawl directing member directs the motion transmitting pawl (436) to engage the release member when the input transmission member (176) rotates to the other one of the upshifting position or the downshifting position.

26. The apparatus (14) according to any of the preceding claims wherein the input transmission member (176) rotates in a first direction to the upshifting position, and wherein the input transmission member (176) rotates in a second direction opposite the first direction to the downshifting position.

27. The apparatus (14) according to claims 25 and 26 wherein the pawl-directing member is coupled to the position-sensing member.

28. The apparatus (14) according to claims 25 to 27 wherein the pawl-directing member is integral with the position-sensing member.

29. The apparatus (14) according to any of the preceding claims wherein, when the input transmission member (176) is located in the second input position and the output transmission member (280) is located in the second output position and the input transmission member (176) moves to at least one of the first input position or third input position, the output transmission member (280) moves to the corresponding first output position or third output position.

30. An assisting apparatus (14) for using power from a rotating member to assist the operation of a bicycle transmission comprising:
a mounting unit;
an input transmission member (176) coupled to the mounting unit, wherein the input transmission member (176) moves to at least a first input position and a second input position;
an output transmission member (280) coupled to the mounting unit, wherein the output transmission member (280) moves to at least a first output position and a second output position corresponding to the first input position and the second input position of the input transmission member, respectively;
wherein at least one of the input transmission member (176) and the output transmission member (280) rotates around a rotational axis;
a rotating member engaging member (498) that moves between a rotating member engaging position and a rotating member disengaging position;
a motion transmitting mechanism for transmitting motion from the rotating member engaging member (498) to the output transmission member (280);
a switching mechanism
for moving the rotating member engaging member (498) to the rotating member engaging position when the input transmission member (176) is in one of the first input position or second input position and the output transmission member (280) is not in the corresponding first output position or second output position, and
for moving the rotating member engaging member (498) to the rotating member disengaging position when the input transmission member (176) is in one of the first input position or second input position and the output transmission member (280) is in the corresponding first output position or second output position;
wherein the switching mechanism includes an axially sliding member that moves in the direction of the rotational axis when the input transmission member (176) moves to the one of the first input position or second input position and the output transmission member (280) does not move to the corresponding first output position or second output position,
the output transmission member (280) includes an output control wire coupler for coupling an output control wire thereto.

## Patentansprüche

1. Unterstützungsvorrichtung (14), welche Kraft von einem sich drehenden Element (534) verwendet, um die Operation einer Fahrradgangschaltung zu unterstützen, aufweisend:
eine Befestigungseinheit;
ein Drehelement-Eingreifelement (498), das sich zwischen einer Drehelement-Eingreifposition und einer Drehelement-Eingrifffreigabeposition bewegt; einen
Bewegungsübertragungsmechanismus, der eine Bewegung vom Drehelement-Eingreifelement (498) auf das Ausgabe-Übertragungselement (280) überträgt ein Eingabe-Übertragungselement (176), das mit der Befestigungseinheit verbunden ist, wobei das Eingabe-Übertragungselement (176) sich in mindestens eine erste Eingabeposition, eine zweite Eingabeposition und eine dritte Eingabeposition bewegt;
ein Ausgabe-Übertragungselement (280), das mit der Befestigungseinheit verbunden ist, wobei sich das Ausgabe-Übertragungselement (280) in mindestens eine erste Ausgabeposition, eine zweite Ausgabeposition und eine dritte Ausgabeposition bewegt, die der ersten Eingabeposition,
der zweiten Eingabeposition bzw. der dritten Eingabeposition des Eingabe-Übertragungselementes (176) entsprechen; und
einen Umschaltmechanismus, welcher das Drehelement-Eingreifelement (498) in die Drehelement-Eingreifposition bewegt, wenn das Eingabe-Übertragungselement (176) sich in einer von der ersten Eingabeposition, der zweiten Eingabeposition oder der dritten Eingabeposition befindet und sich das Ausgabe-Übertragungselement (280) nicht in der entsprechenden ersten Ausgabeposition, der zweiten Ausgabeposition oder der dritten Ausgabeposition befindet, und um das Drehelement-Eingreifelement (498) in die Drehelement-Eingrifffreigabeposition zu bewegen, wenn sich das Eingabe-Übertragungselement (176) in einer von der ersten Eingabeposition, der zweiten Eingabeposition oder der dritten Eingabeposition befindet und sich das Ausgabe-Übertragungselement (280) in der entsprechenden ersten Ausgabeposition, der zweiten Ausgabeposition oder der dritten Ausgabeposition befindet,
**dadurch gekennzeichnet, dass**
das Ausgabe-Übertragungselement (280) eine Ausgabe-Steuerdrahtverbindungseinrichtung beinhaltet, die einen Ausgabe-Steuerdraht mit diesem verbindet.

2. Vorrichtung (14) nach Anspruch 1, bei der das Eingabe-Übertragungselement (176) eine Eingabe-Steuerdrahtverbindungseinrichtung beinhaltet, die einen Eingabesteuerdraht mit diesem verbindet.

3. Vorrichtung (14) nach Anspruch 1 oder 2, bei der das Eingabe-Übertragungselement (176) eine Eingabe-Steuerdraht-Aufwickeffläche (180) beinhaltet.

4. Vorrichtung (14) nach einem der vorhergehenden Ansprüche, bei der das Ausgabe-Übertragungselement (280) eine Ausgabe-Steuerdraht-Autwickelfläche beinhaltet.

5. Vorrichtung (14) nach einem der vorhergehenden Ansprüche, bei welcher der Bewegungsübertragungsmechanismus beinhaltet:
eine Ratsche (298), die eine Antriebsfläche (306) beinhaltet, die mit dem Ausgabe-Übertragungselement (280) verbunden ist; und
eine Bewegungsübertragungsklinke (436), die mit der Antriebsfläche (306) in Eingriff kommt.

6. Vorrichtung (14) nach einem der vorhergehenden Ansprüche, bei welcher der Bewegungsübertragungsmechanismus eine Antriebsachse (400) beinhaltet, die rotiert, wenn das Drehelement-Eingreifelement (498) mit dem Drehelement (534) in Eingriff kommt, und wobei die Bewegungsübertragungsklinke (436) mit der Antriebsachse verbunden ist.

7. Vorrichtung (14) nach einem der vorhergehenden Ansprüche, bei welcher das Drehelement-Eingreifelement (498) eine Drehelement-Eingreifklinke (498) beinhaltet, die mit der Antriebsachse verbunden ist.

8. Vorrichtung (14) nach den Ansprüchen 5 bis 7, bei der die Rasche eine Mehrzahl von Positionsbeibehaltungszähnen (310) beinhaltet, und weiter eine Positionsbeibehaltungsklinke (314) beinhaltet, die mit ausgewählten Zähnen von der Mehrzahl von Positionsbeibehaltungszähnen (310) in Eingriff kommt, um das Ausgabe-Übertragungselement (280) in einer gewählten Position zu halten.

9. Vorrichtung (14) nach den Ansprüchen 7 und 8, bei der die Drehelement-Eingreifklinke (498) mit einem ersten Ende der Antriebsachse verbunden ist, und bei der die Bewegungsübertragungsklinke (314) mit einem zweiten Ende der Antriebsachse verbunden ist.

10. Vorrichtung (14) nach einem der vorhergehenden Ansprüche, bei der das Eingabe-Übertragungselement (176) mit der Befestigungseinheit für eine Rotation um eine Eingabe-Übertragungselementdrehachse (X) verbunden ist, und bei der das Ausgabe-Übertragungselement (280) mit der Befestigungseinheit für eine Rotation um eine Ausgabe-Übertragungsdrehachse (Y) verbunden ist.

11. Vorrichtung (14) nach einem der vorhergehenden Ansprüche, bei welcher der Schaltmechanismus ein Positionsabtastelement (244, 260) beinhaltet, das mit dem Eingabe-Übertragungselement (176) und mit dem Ausgabe-Übertragungselement (280) funktionsmäßig verbunden ist, wobei sich das Positionsabtastelement in eine Einschaltposition bewegt, wenn das Eingabe-Übertragungselement (176) sich in einer von der ersten Eingabeposition, der zweiten Eingabeposition oder der dritten Eingabeposition befindet, und sich das Ausgabe-Übertragungselement (280) nicht in der entsprechenden ersten Ausgabeposition, der zweiten Ausgabeposition oder der dritten Ausgabeposition befindet, und wobei sich das Positionsabtastelement in eine Ausschaltposition bewegt, wenn sich das Eingabe-Übertragungselement (176) in einer von der ersten Eingabeposition, der zweiten Eingabeposition oder der dritten Eingabeposition befindet, und sich das Ausgabe-Übertragungselement (280) in der entsprechenden ersten Ausgabeposition, der zweiten Ausgabeposition oder der dritten Ausgabeposition befindet.

12. Vorrichtung (14) nach einem der vorhergehenden Ansprüche, bei der das Drehelement-Eingreifelement (498) eine Drehelement-Eingreifklinke (498) beinhaltet.

13. Vorrichtung (14) nach einem der vorhergehenden Ansprüche, bei der der Schaltmechanismus beinhaltet:
ein Klinkenbewegungselement (512), das die Drehelement-Eingreifklinke (498) in die Drehelement-Eingreifposition bewegt; und
ein Klinkenrückhalteelement (464, 517), welches die Drehelement-Eingreifklinke (498) in der Drehelement-Eingrifffreigabeposition zurückhält, wenn sich der Umschaltmechanismus in der Ausschaltposition befindet, und welches dem Klinkenbewegungselement (512) gestattet, die Drehelement-Eingreifklinke (498) in die Drehelement-Eingriffposition zu bewegen, wenn sich der Umschaltmechanismus in der Einschaltposition befindet.

14. Vorrichtung (14) nach den Ansprüchen 11 bis 13, bei der sich das Positionsabtastelement radial relativ zum Eingabe-Übertragungselement (176) bewegt.

15. Vorrichtung (14) nach den Ansprüchen 11 bis 14, bei der der Umschaltmechanismus weiter ein Bewegungsumwandlungselement (354) beinhaltet, um eine Radialbewegung des Positionsabtastelementes in eine Bewegung zumindest teilweise in Richtung der Eingabe-Übertragungselementdrehachse (X) umwandelt.

16. Vorrichtung (14) nach den Ansprüchen 11 bis 15, bei welcher der Umschaltmechanismus weiter eine Schubstange (416) aufweist, um eine Bewegung des Bewegungsumwandlungselementes an das Klinkenrückhalteelement (464, 517) weiterzuleiten.

17. Vorrichtung (14) nach einem der vorhergehenden Ansprüche, bei der die Eingabe-Übertragungselementdrehachse (X) mit der Ausgabe-Übertragungselementdrehachse (Y) zusammenfällt.

18. Vorrichtung (14) nach einem der vorhergehenden Ansprüche, bei welcher der Umschaltmechanismus weiter einen Zwischenring (236) aufweist, der ein Positionsabtastelement-Eingreifelement (245, 246) aufweist, das mit dem Positionsabtastelement in Eingriff ist, und wobei der Zwischenring (236) durch das Eingabe-Übertragungselement (176) rotiert wird.

19. Vorrichtung (14) nach Anspruch 18, bei welcher der Umschaltmechanismus weiter ein Widerlager (290, 292, 530) aufweist, welches bewirkt, dass der Zwischenring (236) exzentrisch rotiert.

20. Vorrichtung (14) nach den Ansprüchen 18 und 19, bei welcher das Widerlager (290, 292, 530) mit dem Ausgabe-Übertragungselement (280) verbunden ist.

21. Vorrichtung (14) nach den Ansprüchen 18 bis 20, bei der das Positionsabtastelement eine sich in Umfangsrichtung erstreckende Fläche beinhaltet, die einen Positionsabtastbogen (248) definiert, wobei das Positionsabtastelement-Eingreifelement (245, 246) mit dem Positionsabtastbogen in Eingriff kommt, und wobei das Widerlager (290, 292, 530) mit einer Innenumfangsfläche des Zwischenrings (236) in Eingriff kommt.

22. Vorrichtung (14) nach den Ansprüchen 18 bis 21, bei der das Positionsabtastelement-Eingreifelement eine Rolle (245, 246) beinhaltet.

23. Vorrichtung (14) nach einem der vorhergehenden Ansprüche, welche weiter ein Freigabeelement (338) aufweist, welches die Positionsbeibehaltungsklinke (314) außer Eingriff bringt.

24. Vorrichtung (14) nach einem der vorhergehenden Ansprüche, bei der das Eingabe-Übertragungselement (176) sich in eine Hochschaltposition relativ zum Ausgabe-Übertragungselement (280) dreht, und wobei das Eingabe-Übertragungselement (176) in eine Herunterschaltposition relativ zum Ausgabe-Übertragungselement (280) rotiert.

25. Vorrichtung (14) nach einem der vorhergehenden Ansprüche, welche weiter ein Klinkenleitelement beinhaltet, wobei das Klinkenleitelement die Bewegungsübertragungsklinke (436) leitet, um mit der Antriebsfläche der Ratsche (298) in Eingriff zu kommen, wenn das Eingabe-Übertragungselement (176) in die eine von der Hochschaltposition oder der Herunterschaltposition rotiert, und wobei das Klinkenleitelement die Bewegungsübertragungsklinke (436) leitet, so dass sie mit dem Freigabeelement in Eingriff kommt, wenn das Eingabe-Übertragungselement (176) in die jeweils andere von der Hochschaltposition oder der Herunterschaltposition rotiert.

26. Vorrichtung (14) nach einem der vorhergehenden Ansprüche, bei der das Eingabe-Übertragungselement (176) in einer ersten Richtung in die Hochschaltposition rotiert, und bei der das Eingabe-Übertragungselement (176) in eine zweite Richtung entgegengesetzt zur ersten Richtung in die Herunterschaltposition rotiert.

27. Vorrichtung (14) nach den Ansprüchen 25 und 26, bei der das Klinkenleitelement mit dem Positionsabtastelement verbunden ist.

28. Vorrichtung (14) nach den Ansprüchen 28 bis 27, bei der das Klinkenleitelement mit dem Positionsabtastelement integral ist.

29. Vorrichtung (14) nach einem der vorhergehenden Ansprüche, bei der, wenn sich das Eingabe-Übertragungselement (176) in der zweiten Eingabeposition befindet und sich das Ausgabe-Übertragungselement (280) in der zweiten Ausgabeposition befindet und sich das Eingabe-Übertragungselement (176) in mindestens eine von der ersten Eingabeposition oder der dritten Eingabeposition bewegt, sich das Ausgabe-Übertragungselement (280) in die entsprechende erste Ausgabeposition oder dritte Ausgabeposition bewegt.

30. Unterstützungsvorrichtung (14) zur Verwendung von Kraft von einem Drehelement, um die Operation einer Fahrradgangschaltung zu unterstützen, aufweisend:
eine Befestigungseinheit;
ein Eingabe-Übertragungselement (176), das mit der Befestigungseinheit verbunden ist, wobei das Eingabe-Übertragungselement (176) sich in mindestens eine erste Eingabeposition und eine zweite Eingabeposition bewegt; ein Ausgabe-Übertragungselement (280), das mit der Befestigungseinheit verbunden ist, wobei sich das Ausgabe-Übertragungselement (280) in mindestens eine erste Ausgabeposition und eine zweite Ausgabeposition bewegt, die der ersten Eingabeposition und der zweiten Eingabeposition des Eingabe-Übertragungselementes entsprechen;
wobei sich das Eingabe-Übertragungselement (176) und/oder das Ausgabe-Übertragungselement (280) um eine Drehachse dreht;
ein Drehelement-Eingreifelement (498), das sich zwischen einer Drehelement-Eingreifposition und einer Drehelement-Eingrifffreigabeposition bewegt;
einen Bewegungsübertragungsmechanismus, der eine Bewegung vom Drehelement-Eingreifelement (498) auf das Ausgabe-Übertragungselement (280) überträgt;
einen Umschaltmechanismus, welcher das Drehelement-Eingreifelement (498) in die Drehelement-Eingreifposition bewegt, wenn das Eingabe-Übertragungselement (176) sich in einer von der ersten Eingabeposition oder der zweiten Eingabeposition befindet, und sich das Ausgabe-ÜberUagungselement (280) nicht in der entsprechenden ersten Ausgabeposition oder der zweiten Ausgabeposition befindet, und um das Drehelement-Eingreifelement (498) in die Drehelement-Eingrifffreigabeposition zu bewegen, wenn sich das Eingabe-Übertragungselement (176) in einer von der ersten Eingabeposition oder der zweiten Eingabeposition befindet und sich das Ausgabe-Übertragungselement (280) in der entsprechenden ersten Ausgabeposition oder der zweiten Ausgabeposition befindet;
wobei der Umschaltmechanismus ein in axialer Richtung gleitend verschiebliches Element beinhaltet, das sich in Richtung der Drehachse bewegt, wenn sich das Eingabe-Übertragungselement (176) in die eine von der ersten Eingabeposition oder der zweiten Eingabeposition bewegt und sich das Ausgabe-Übertragungselement (280) nicht in die entsprechende erste Ausgabeposition oder zweite Ausgabeposition bewegt,
das Ausgabe-Übertragungselement (280) beinhaltet eine Ausgabe-Steuerdrahtverbindungseinrichtung, die einen Ausgabesteuerdraht mit diesen verbindet.

## Revendications

1. Appareil d'assistance (14) conçu pour utiliser la puissance d'un élément rotatif (534) pour assister le fonctionnement d'une transmission de bicyclette, comprenant :
une unité de montage ;
un élément d'engagement d'élément rotatif (498) qui se déplace entre une position d'engagement d'élément rotatif et une position de désengagement d'élément rotatif ;
un mécanisme de transmission de mouvement pour transmettre le mouvement de l'élément d'engagement d'élément rotatif (498) à l'élément de transmission de sortie (280) ;
un élément de transmission d'entrée (176) couplé à l'unité de montage, l'élément de transmission d'entrée (176) se déplaçant vers au moins un première position d'entrée, une deuxième position d'entrée et une troisième position d'entrée ;
un élément de transmission de sortie (280) couplé à l'unité de montage, dans lequel l'élément de transmission de sortie (280) se déplace vers au moins une première position de sortie, une deuxième position de sortie et une troisième position de sortie correspondant à la première position d'entrée, à la deuxième position d'entrée et à la troisième position d'entrée de l'élément de transmission d'entrée (176), respectivement ; et
un mécanisme de commande destiné à déplacer l'élément d'engagement d'élément rotatif (498) vers la position d'engagement d'élément rotatif lorsque l'élément de transmission d'entrée (176) est dans une position parmi la première position d'entrée, la deuxième position d'entrée ou la troisième position d'entrée et l'élément de transmission de sortie (280) n'est pas dans la première position de sortie, la deuxième position de sortie ou la troisième position de sortie correspondante, et destiné à déplacer l'élément d'engagement d'élément rotatif (498) vers la position de désengagement d'élément rotatif lorsque l'élément de transmission d'entrée (176) est dans une position parmi la première position d'entrée, la deuxième position d'entrée ou la troisième position d'entrée et l'élément de transmission de sortie (280) est dans la première position de sortie, la deuxième position de sortie ou la troisième position de sortie correspondante,
**caractérisé en ce que**
l'élément de transmission de sortie (280) comprend un coupleur de câble de commande de sortie destiné à coupler un câble de commande de sortie à celui-ci.

2. Appareil (14) selon la revendication 1, dans lequel l'élément de transmission d'entrée (176) comprend un coupleur de câble de commande d'entrée destiné à coupler un câble de commande d'entrée à celui-ci.

3. Appareil (14) selon la revendication 1 ou 2, dans lequel l'élément de transmission d'entrée (176) comprend une surface d'enroulement de câble de commande d'entrée (180).

4. Appareil (14) selon l'une quelconque des revendications précédentes, dans lequel l'élément de transmission de sortie (280) comprend une surface d'enroulement de câble de commande de sortie.

5. Appareil (14) selon l'une quelconque des revendications précédentes, dans lequel le mécanisme de transmission de mouvement comprend :
un rochet (298) comportant une surface d'entraînement (306) couplée à l'élément de transmission de sortie (280) ; et
un cliquet transmettant le mouvement (436) pour venir en prise avec la surface d'entraînement (306).

6. Appareil (14) selon l'une quelconque des revendications précédentes, dans lequel le mécanisme de transmission de mouvement comprend un arbre d'entraînement (400) qui tourne lorsque l'élément d'engagement d'élément rotatif (498) vient en prise avec l'élément rotatif (534), et dans lequel le cliquet de transmission de mouvement (436) est couplé à l'arbre d'entraînement.

7. Appareil (14) selon l'une quelconque des revendications précédentes, dans lequel l'élément d'engagement d'élément rotatif (498) comprend un cliquet d'engagement d'élément rotatif (498) couplé à l'arbre d'entraînement.

8. Appareil (14) selon l'une quelconque des revendications 5 à 7, dans lequel le rochet comprend une pluralité de dents de maintien de position (310), et comprend en outre un cliquet de maintien de position (314) qui vient en prise avec des dents sélectionnées parmi la pluralité de dents de maintien de position (310) afin de maintenir l'élément de transmission de sortie (280) dans une position sélectionnée.

9. Appareil (14) selon l'une quelconque des revendications 7 et 8, dans lequel le cliquet d'engagement d'élément rotatif (498) est couplé à une première extrémité de l'arbre d'entraînement, et dans lequel le cliquet de transmission de mouvement (314) est couplé à une deuxième extrémité de l'arbre d'entraînement.

10. Appareil (14) selon l'une quelconque des revendications précédentes, dans lequel l'élément de transmission d'entrée (176) est couplé à l'unité de montage pour pivoter autour d'un axe de rotation de l'élément de transmission d'entrée (X), et dans lequel l'élément de transmission de sortie (280) est couplé à l'unité de montage pour pivoter autour d'un axe de rotation de transmission de sortie (Y).

11. Appareil (14) selon l'une quelconque des revendications précédentes, dans lequel le mécanisme de commande comprend un élément de détection de position (244, 260) couplé de manière opérationnelle avec l'élément de transmission d'entrée (176) et avec l'élément de transmission de sortie (280), dans lequel l'élément de détection de position se déplace dans une position activée lorsque l'élément de transmission d'entrée (176) est dans une position parmi la première position d'entrée, la deuxième position d'entrée ou la troisième position d'entrée et l'élément de transmission de sortie (280) n'est pas dans la première position de sortie, la deuxième position de sortie ou la troisième position de sortie correspondante, et dans lequel l'élément de détection de position se déplace dans une position désactivée lorsque l'élément de transmission d'entrée (176) est dans une position parmi la première position d'entrée, la deuxième position d'entrée ou la troisième position d'entrée et l'élément de transmission de sortie (280) est dans la première position de sortie, la deuxième position de sortie ou la troisième position de sortie correspondante.

12. Appareil (14) selon l'une quelconque des revendications précédentes, dans lequel l'élément d'engagement d'élément rotatif (498) comprend un cliquet d'engagement d'élément rotatif (498).

13. Appareil (14) selon l'une quelconque des revendications précédentes, dans lequel le mécanisme de commande comprend :
un élément de déplacement de cliquet (512) qui déplace le cliquet d'engagement d'élément rotatif (498) dans la position d'engagement d'élément rotatif ; et
un élément de retenue de cliquet (464, 517) qui retient le cliquet d'engagement d'élément rotatif (498) dans la position de désengagement d'élément rotatif lorsque le mécanisme de commande est dans la position désactivée et qui permet à l'élément de déplacement de cliquet (512) de déplacer le cliquet d'engagement d'élément rotatif (498) vers la position d'engagement d'élément rotatif lorsque le mécanisme de commande est dans la position activée.

14. Appareil (14) selon les revendications 11 à 13, dans lequel l'élément de détection de position se déplace radialement par rapport à l'élément de transmission d'entrée (176).

15. Appareil (14) selon les revendications 11 à 14, dans lequel le mécanisme de commande comprend en outre un élément de conversion de mouvement (354) destiné à convertir le mouvement radial de l'élément de détection de position en un mouvement au moins en partie dans la direction de l'axe de rotation de l'élément de transmission d'entrée (X).

16. Appareil (14) selon les revendications 11 à 15, dans lequel le mécanisme de commande comprend une tige poussoir (416) afin de communiquer le mouvement de l'élément de conversion de mouvement à l'élément de retenue du cliquet (464, 517).

17. Appareil (14) selon l'une quelconque des revendications précédentes, dans lequel l'axe de rotation de l'élément de transmission d'entrée (X) coïncide avec l'axe de rotation de l'élément de transmission de sortie (Y).

18. Appareil (14) selon l'une quelconque des revendications précédentes, dans lequel le mécanisme de commande comprend en outre une bague intermédiaire (236) présentant un élément d'engagement d'élément de détection de position (245, 246) qui vient en prise avec l'élément de détection de position, et dans lequel la bague intermédiaire (236) est tournée par l'élément de transmission d'entrée (176).

19. Appareil (14) selon la revendication 18, dans lequel le mécanisme de commande comprend en outre une butée (290, 292, 530) de manière à entraîner la rotation excentrique de la bague intermédiaire (236).

20. Appareil (14) selon les revendications 18 et 19, dans lequel la butée (290, 292, 530) est couplée à l'élément de transmission de sortie (280).

21. Appareil (14) selon les revendications 18 à 20, dans lequel l'élément de détection de position comprend une surface s'étendant de manière circonférentielle définissant un arc de détection de position (248), dans lequel l'élément d'engagement de l'élément de détection de position (245, 246) vient en prise avec l'arc de détection de position, et dans lequel la butée (290, 292, 530) vient en prise avec une surface périphérique interne de la bague intermédiaire (236).

22. Appareil (14) selon les revendications 18 à 21 dans lequel l'élément d'engagement de l'élément de détection de position comprend un galet (245, 246).

23. Appareil (14) selon l'une quelconque des revendications précédentes comprenant en outre un élément de libération (338) destiné à désengager le cliquet de maintien de position (314).

24. Appareil (14) selon l'une quelconque des revendications précédentes, dans lequel l'élément de transmission d'entrée (176) tourne vers une position de passage à un rapport supérieur par rapport à l'élément de transmission de sortie (280), et dans lequel l'élément de transmission d'entrée (176) tourne vers une position de passage à un rapport inférieur par rapport à l'élément de transmission de sortie (280).

25. Appareil (14) selon l'une quelconque des revendications précédentes comprenant en outre un élément de direction de cliquet, dans lequel l'élément de direction de cliquet dirige le cliquet de transmission de mouvement (436) afin qu'il vienne en prise avec la surface d'entraînement du rochet (298) lorsque l'élément de transmission d'entrée (176) tourne dans la position de passage à un rapport supérieur ou dans la position de passage à un rapport inférieur, et dans lequel l'élément de direction de cliquet dirige le cliquet de transmission de mouvement (436) afin qu'il vienne en prise avec l'élément de libération lorsque l'élément de transmission d'entrée (176) tourne dans l'autre position parmi la position de passage à un rapport supérieur et la position de passage à un rapport inférieur.

26. Appareil (14) selon l'une quelconque des revendications précédentes, dans lequel l'élément de transmission d'entrée (176) tourne dans une première direction vers la position de passage à un rapport supérieur, et dans lequel l'élément de transmission d'entrée (176) tourne dans une seconde direction opposée à la première direction vers la position de passage à un rapport inférieur.

27. Appareil (14) selon les revendications 25 et 26, dans lequel l'élément de direction de cliquet est couplé à l'élément de détection de position.

28. Appareil (14) selon les revendications 25 à 27, dans lequel l'élément de direction de cliquet est solidaire de l'élément de détection de position.

29. Appareil (14) selon l'une quelconque des revendications précédentes, dans lequel lorsque l'élément de transmission d'entrée (176) est situé dans la deuxième position d'entrée et l'élément de transmission de sortie (280) est situé dans la deuxième position de sortie et l'élément de transmission d'entrée (176) se déplace vers au moins la première position d'entrée ou la troisième position d'entrée, l'élément de transmission de sortie (280) se déplace vers la première position de sortie ou la troisième position de sortie correspondante.

30. Appareil d'assistance (14) conçu pour utiliser la puissance d'un élément rotatif pour assister le fonctionnement d'une transmission de bicyclette, comprenant :
une unité de montage ;
un élément de transmission d'entrée (176) couplé à l'unité de montage, dans lequel l'élément de transmission d'entrée (176) se déplace vers au moins une première position d'entrée et une deuxième position d'entrée ;
un élément de transmission de sortie (280) couplé à l'unité de montage, dans lequel l'élément de transmission de sortie (280) se déplace vers au moins une première position de sortie et une deuxième position de sortie correspondant à la première position d'entrée et à la deuxième position d'entrée de l'élément de transmission d'entrée, respectivement ;
dans lequel au moins un élément parmi l'élément de transmission d'entrée (176) et l'élément de transmission de sortie (280) pivote autour d'un axe de rotation ;
un élément d'engagement d'élément rotatif (498) qui se déplace entre une position d'engagement d'élément rotatif et une position de désengagement d'élément rotatif ;
un mécanisme de transmission de mouvement pour transmettre le mouvement de l'élément d'engagement d'élément rotatif (498) à l'élément de transmission de sortie (280) ;
un mécanisme de commande
destiné à déplacer l'élément d'engagement d'élément rotatif (498) vers la position d'engagement
d'élément rotatif lorsque l'élément de transmission d'entrée (176) est dans une position parmi la première position d'entrée et la deuxième position d'entrée et l'élément de transmission de sortie (280) n'est pas dans la première position de sortie ou la deuxième position de sortie correspondante, et
destiné à déplacer l'élément d'engagement d'élément rotatif (498) vers la position de désengagement d'élément rotatif lorsque l'élément de transmission d'entrée (176) est dans une position parmi la première position d'entrée et la deuxième position d'entrée et l'élément de transmission de sortie (280) est dans la première position de sortie ou la deuxième position de sortie correspondante ;
dans lequel le mécanisme de commande comprend un élément coulissant axialement qui se déplace dans la direction de l'axe de rotation lorsque l'élément de transmission d'entrée (176) se déplace vers la première position d'entrée ou la deuxième position d'entrée et l'élément de transmission de sortie (280) ne se déplace pas vers la première position de sortie ou la deuxième position de sortie correspondante,
l'élément de transmission de sortie (280) comprend un coupleur de câble de commande de sortie destiné à coupler un câble de commande de sortie à celui-ci.
